# EUROPEAN PATENT APPLICATION

(11) **EP 4 738 103 A1**
(43) Date of publication of application: **06.05.2026**
(21) Application number: 25197860.7
(22) Date of filing: 25.08.2025
(51) Int. Cl.: G06F 8/61, G06F 21/10, G06F 21/12

(54) **METHOD AND SYSTEM FOR SIMULTANEOUS SOFTWARE ACTIVATION OF MULTIPLES SYSTEM BASED ON THEIR SERIAL NUMBERS**

(30) Priority: 04.11.2024 CN 202411557770
(71) Applicant: Getac Technology Corporation, New Taipei City 221009 (TW)
(72) Inventor: WEI, Jen-Ching, 11568 Taipei City (TW); LIN, Chun-Hui, 11568 Taipei City (TW)
(74) Representative: Viering, Jentschura & Partner mbB Patent- und Rechtsanwälte

(57) **Abstract**

A software activation method includes the following steps. An installation program created according to a stock keeping unit of an application program in a current order from a customer is obtained by an activation server, and the installation program and an enabling program are provided. The installation program is executed by a user device to install or update the application program, and after completing installation of the installation program, the activation server performs the following steps. A plurality of device serial numbers included in a past purchase order from the customer are obtained. Device information of the user device is verified according to the device serial numbers. When the verification passes, a license key is provided to the user device. The execution for the application program in the user device is activated based on the license key.

## Description

### BACKGROUND

### Field of Invention

The present invention relates to a method and system for software activation. More particularly, the present invention relates to a method and system for software activation that is applicable for software subscription services.

### Description of Related Art

Nowadays, most hardware devices bundled with software are still sold with outright perpetual licenses. However, with the development of artificial intelligence techniques (e.g., machine learning models, neural network models, etc.), these purchase models lead to little knowledge of how the product is actually being used by users in application scenarios, and to difficulty in future software enhancements, even though these one-time purchase models generate outright sales and single-period revenue. Accordingly, it is not easy to complete the entire customer journey this way and to build stable long-term client relationships.

That is, there is no one-size-fits-all solution which is suitable for software. For example, if a single standardized version of an artificial intelligence model cannot satisfy customer's requirements in different application scenarios, then when there is a customized requirement for third party software, timely fine-tuning and technical integration are still needed in order to correspondingly generate individual software installation files.

Furthermore, in the past, when there are requirements to order software after hardware devices had been purchased, customers need to provide serial charges and to perform software installation. However, it is inconvenient for terminal device customers or field users to collect entire serial numbers in order to activate the devices, and asking for this deteriorates the consumer experience.

Therefore, providing a suitable software activation method to solve the above problems is an important issue in this field.

### SUMMARY

The present disclosure provides a software activation method. The software activation method includes the following steps. An installation program created according to a stock keeping unit of an application program in a current order from a customer is obtained by an activation server, and the installation program and an enabling program are provided by the activation server. The installation program to install or update the application program is executed by a user device, and the program is enabled by the user device after completing installation of the installation program. When the user device executes the enabling program and allows network access, the software activation method further includes the following steps. A plurality of device serial numbers included in a past purchase order of the customer are obtained by the activation server. Device information of the user device is verified according to the plurality of device serial numbers. A license key is provided by the activation server to the user device when verification passes, and the execution of the application program on the user device is activated based on the license key.

In one or more embodiments, each of the plurality of device serial numbers includes at least one of a serial number of a device, a central processor unit identification or a mainboard identification, and wherein the device information of the user device includes at least one of a serial number of the user device, a central processor unit identification or a mainboard identification.

In one or more embodiments, each of the current order and the past purchase order includes an electronic mail address, and wherein the past purchase order is searched based on an electronic mail domain of the electronic mail address.

In one or more embodiments, the electronic mail domain refers to an organization or a company owning the electronic mail address.

In one or more embodiments, the electronic mail domain includes information of a city or a region.

In one or more embodiments, the installation program includes an activation library created based on information of the current order. The activation library is written into the user device when the user device executes the installation program. The software activation method further includes the following steps. The device information and a return value of the activation library are sent by the user device to the activation server, when the user device executes the enabling program and allows the network access. The return value and the device information of the user device are verified by the activation server according to the information of the current order and the plurality of device serial numbers.

In one or more embodiments, the return value of the activation library corresponds to the stock keeping unit of the application program.

In one or more embodiments, when the user device executes the enabling program and allows the network access, the software activation method further includes the following steps. The return value and the device information are verified by the activation server according to the stock keeping unit and the plurality of device serial numbers.

In one or more embodiments, when the verification fails, the license key is not provided, such that the execution of the application program on the user device is inactive.

In one or more embodiments, software activation method further includes the following steps. A product quantity in the current order is obtained by the activation server. The activation server determines that the current order has been completed, when number of authorized devices reaches the product quantity.

The present disclosure provides a software activation system to perform any method according to the aforementioned embodiments.

In summary, the software activation method and software activation system of the present disclosure verify the device information of the user devices to be activated according to the device serial numbers included in a past order of the same customer. Accordingly, the step of providing the device serial numbers of the user devices to be activated when the customer provides the purchase order can be omitted, which improves the consumer experience and increases customer stickiness.

### BRIEF DESCRIPTION OF THE DRAWINGS

The present disclosure can be more fully understood by reading the following detailed description of the embodiment, with reference made to the accompanying drawings as follows.
Fig. 1 depicts a schematic diagram of architecture of a sale management system for software subscription services according to some embodiments of the present disclosure.
Fig. 2 depicts a schematic diagram of a software activation system according to some embodiments of the present disclosure.
Fig. 3A and Fig. 3B depict flow charts of a software activation method according to some embodiments of the present disclosure.
Fig. 4A and Fig. 4B depict flow charts of a software activation method according to some embodiments of the present disclosure.

### DETAILED DESCRIPTION

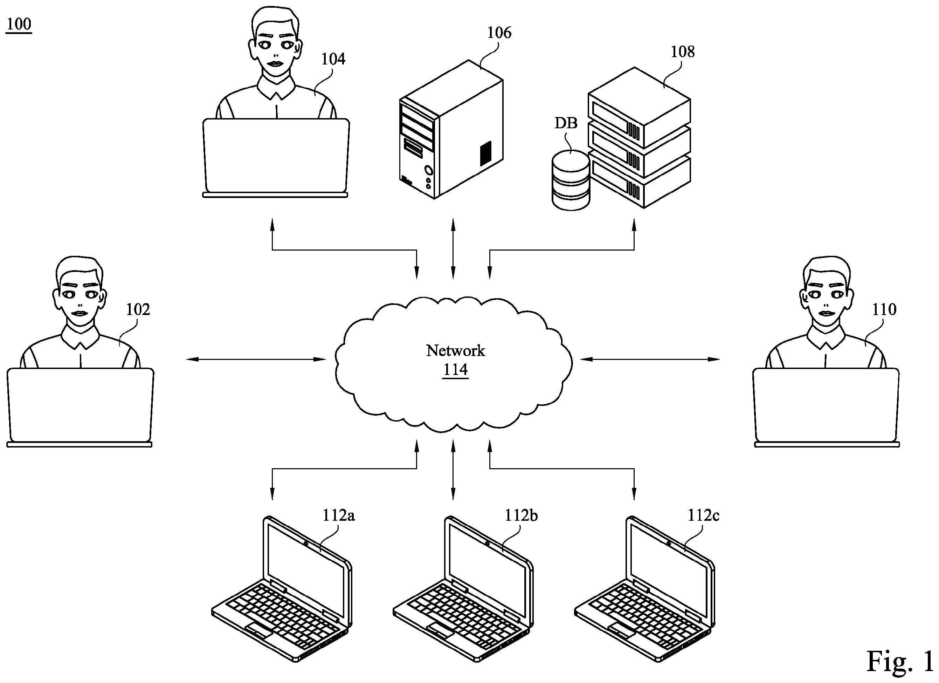

A description is provided with reference to Fig. 1. Fig. 1 depicts a schematic diagram of architecture of a sales management system 100 for software subscription services according to some embodiments of the present disclosure. In some embodiments, purchasers and sales team members can respectively use the computing devices 102 and 104 connected through access points to a network 114 to communicate, thereby ordering the software. For example, the purchasers fill out a purchase order electronically (e.g., web forms) by using the computing device 102, and the computing device 102 sends the data of the purchase order through the network 114 to the computing device 104 used by sales team members. In some embodiments, the purchase order includes a stock keeping unit (e.g., an identification number of a software product), a product quantity (e.g., the number of devices on which the product to be installed) and information of an email address of the customer, and the purchase order does not include serial numbers of the hardware devices or the order number of original hardware devices.

In some embodiments, the sales team members can use the computing device 104 to search a past purchase order of the customer based on an email domain in the email address of the customer. In some embodiments, the past purchase order can be an order that the customer had purchased devices and/or software in the past, and as such all device serial numbers purchased by the customer can be obtained according to the records of the past purchase order and/or the past sales order, where each of the said device serial numbers includes at least one of a device serial number, a central processor unit identification and a mainboard identification.

In some embodiments, both of the current purchase order and the past purchase order includes the email address of the customer. In some embodiments, the email domain in the email address refers to an organization or a company owning the electronic mail address, where the email domain is the part of the email address which comes after the "@" symbol. In some embodiments, the said email domain refers to a local government agency owning the email address. In some embodiments, the said email domain includes information of a city or a region. For example, if an email domain is represented as "OO.org", where the term "OO" refers to an abbreviation of a city or a region. As a result, the branches of a company or organization can be distinguished by the email address, and then the past purchase order of the customer can be searched based on the email domain in the email address in the current purchase order. Therefore, it is no need providing the serial numbers of the hardware devices or an order number of the original hardware devices in the current purchase order by the customer, thereby improving the customer buying process, thus the consumption experience and the customer stickiness increase.

In some embodiments, the sales team members can use the computing device 104 to fill out and generate a sales order and a software delivery number, where the said sales order includes device serial numbers of all devices purchased by a customer (e.g., a branch of a company or a branch of an organization), a stock keeping unit (e.g., an identification number of a software product), a product quantity (e.g., the number of the devices on which the product to be installed) and information of email address of the customer. In some embodiments, the customer data, the order quantity and the delivery date can be searched based on the software delivery number.

In some embodiments, the management equipment 106 can be a server hosting an enterprise resource planning application or a computing device. In some embodiments, the management equipment 106 sends emails to notify the sales team and performs software automated transactions.

In some embodiments, the activation server 108 checks the current order (e.g., the sales order and/ or the content searched by the software delivery number), thereby providing a SLA protocol to customer by sending the email. After the customer sign off the SLA protocol, the activation server 108 obtains an installation program created according to the stock keeping unit. In some embodiments, the application program has multiple types of versions, e.g., a basic version, a professional version and a customized version. In some embodiments, the stock keeping unit refers to a certain version of an application program. In some embodiments, software engineers can use the computing device 110 to create the corresponding version of the application program based on the stock keeping unit in the current order, and stores the said application program in the database DB of the activation server 108.

In some embodiments, the activation server 108 sends the download links for the corresponding version of the application program (which includes an installation program and an enabling program of the application program and an activation library referring to the stock keeping unit) by an email to the email address of the customer.

In some embodiments, the user devices 112a-112c can download the installation program, the enabling program and the activation library of the application program and by the aforesaid download links. When each of the user devices 112a-112c executes the installation program, the activation library is written into the user devices 112a-112c. In some embodiments, after each of the user devices 112a-112c completes the installation/update of the application program by the executing of the installation program, each of the user devices 112a-112c executes the enabling program and allows the network access to send the device information and a return value of the activation library to the activation server 108, thus the activation server 108 verify the device information and the return value sent by each of the user devices 112a-112c according to the information in the current order (e.g., the stock keeping unit) and the device serial numbers obtained from the past order, so as to determine whether to provide the license key to the user devices 112a-112c according to the verification. In some embodiments, the device information of each of the user devices 112a-112c includes at least one of a serial number of the user device, a central processor unit identification and a mainboard identification. In some embodiments, the return value of the activation library corresponds to the stock keeping unit of the application program. In some embodiments, the installation program can be an automatic installation file (e.g., a MSI file (packages of Windows Installer)). As a result, the non-serial number-bound subscription service can be implemented by the update mechanism of the automatic installation file.

In some embodiments, the computing device of the present disclosure (e.g., the computing devices 102, 104 and 110 in Fig. 1) can be an electronic device with storage functions, processing functions and communication functions, where the electronic device can be a panel-mounted computer, computer, mobile device, etc. In some embodiments, the user device of the present disclosure (e.g., the computing devices 112a~112c)can be an electronic device with storage functions, processing functions and communication functions, where the electronic device can be a panel-mounted computer, computer, mobile device, etc.

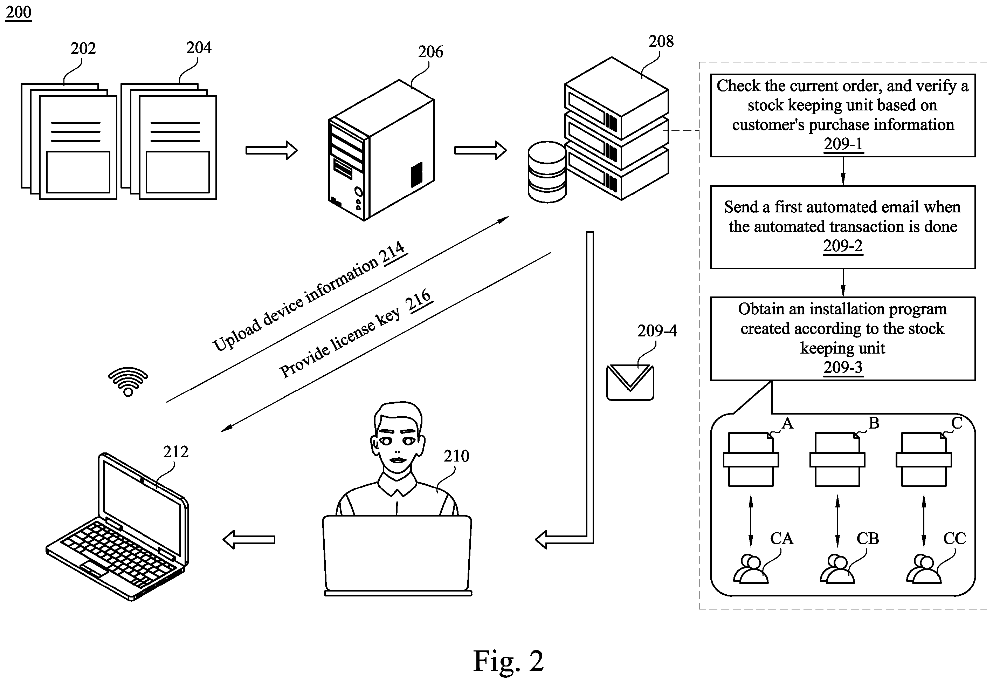

A description is provided with reference to Fig. 2. Fig. 2 depicts a schematic diagram of a software activation system 200 according to some embodiments of the present disclosure. As shown in Fig. 2, the software activation system 200 includes a management equipment 206 and an activation server 208. In some embodiments, the management equipment 206 and the activation server 208 in Fig. 2 respectively correspond to the management equipment 106 and the activation server 108 in Fig. 1.

In some embodiments, the management equipment 206 receives the purchase order 202 and the sales order 204, thereby performing an automated transaction, and then the activation server 208 performs steps 209-1~209-3.

Step 209-1 is performed to check the current order, and verify a stock keeping unit based on customer's purchase information (e.g., the stock keeping unit/the identification number of the software product filled in the purchase order by the customer).

Step 209-2 is performed to send a first automated email when the automated transaction is completed. In some embodiments, the first automated email includes a SLA protocol, and step 209-3 is performed after the customer sign off the SLA protocol.

Step 209-3 is performed to obtain an installation program created according to the stock keeping unit. For example, an installation program A of a basic version of an application program is created according to a stock keeping unit in a purchase order from a customer CA. An installation program B of a basic version of an application program is created according to a stock keeping unit in a purchase order from a customer CB. An installation program C of a basic version of an application program is created according to a stock keeping unit in a purchase order from a customer CC, and so on. The activation server 208 obtains the application program version corresponding to the stock keeping unit of the current order. The links of the installation program, enabling program and activation library of the application program, and the SLA protocol sign-back link are sent by the second email 209-4 to the email address of the customer.

In some embodiments, purchasers or a contact person in the customer side can use the computing device 210 to forward the second email 209-4 to the user of the user device 212. In some embodiments, purchasers or a contact person in the customer side can use the computing device 210 to open the second email 209-4, and download the installation program, the enabling program and the activation library of the application program by the aforesaid download links, and duplicate the files of the application program to a flash memory which can be utilized to transmit the files of the application program to the user device 212. In some embodiments, the computing device 210 in Fig. 2 corresponds to the computing device 102 in Fig. 1.

In some embodiments, the user device 212 executes the installation file of the application program to update or install the application program, and the user device 212 executes the enabling program of the application program after completing the update or installation of the application program. In some embodiments, when the user device 212 executes the enabling program of the application program and allows the network access, the user device 212 performs step 214 to upload a device information (e.g., the device serial number), such that the activation server 208 verifies the device information according to device serial numbers in a past order of the customer. When the verification passes, the activation server 208 performs step 216 to provide the license key through the network to the user device 212. In some embodiments, the user device 212 in Fig. 2 corresponds to any one of the user device 112a-112c in Fig. 1.

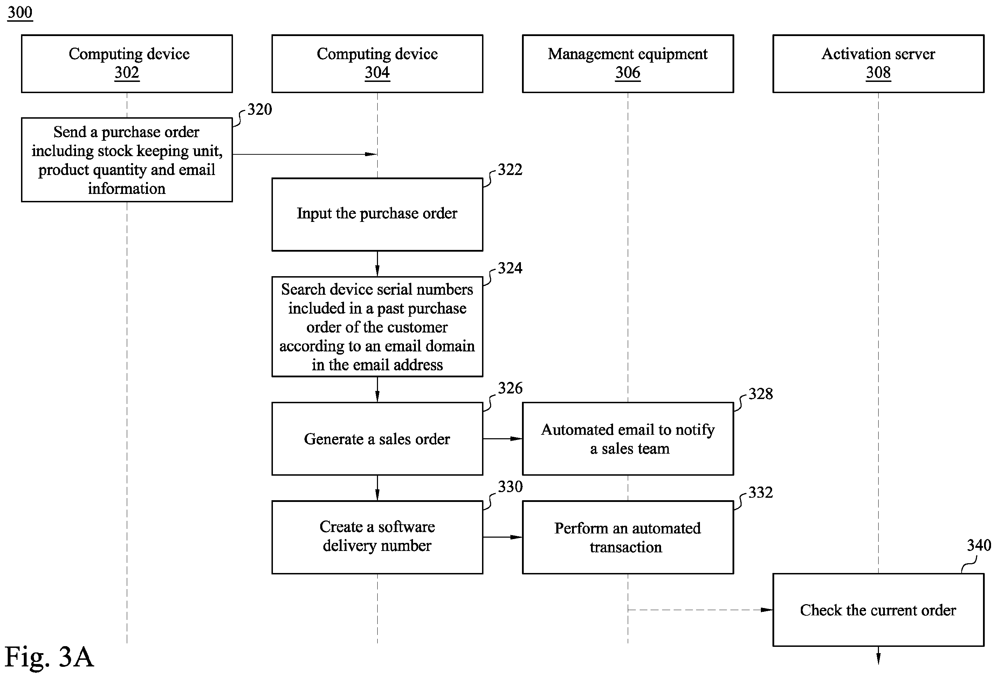

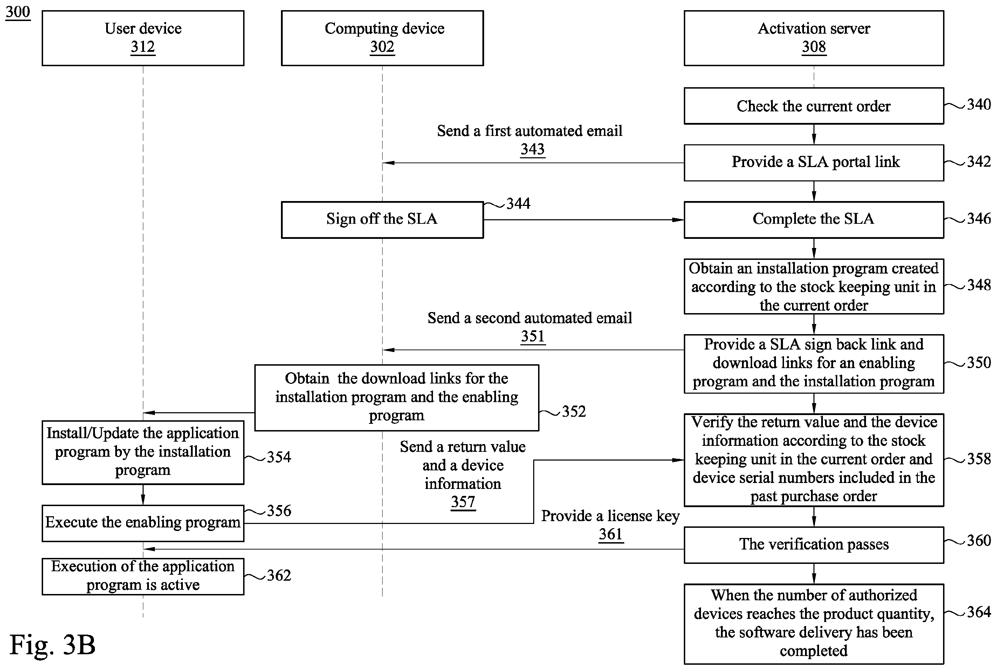

A description is provided with reference to Fig. 3A and Fig. 3B. Fig. 3A and Fig. 3B depict flow charts of a software activation method 300 according to some embodiments of the present disclosure. In some embodiments, the software activation method 300 includes steps 320, 322, 324, 326, 328, 330, 332, 340, 342, 343, 344, 346, 348, 350, 351, 352, 354, 356, 358, 360, 361, 362 and 364.

In step 320, purchasers in the customer side use the computing device 302 to send a purchase order including a stock keeping unit, product quantity and email information.

In step 320, the sales team member uses the computing device 304 to input the purchase order.

In step 324, the sales team member uses the computing device 304 to search device serial numbers included in a past purchase order of the customer according to an email domain in the email address.

Step 326 is performed to generate the sales order. In some embodiments, the sales order includes device serial numbers of all devices purchased by a customer (e.g., a branch of a company or a branch of an organization), a stock keeping unit (e.g., an identification number of a software product), a product quantity (e.g., the number of the devices on which the product to be installed) and information of email address of the customer.

In step 328, the management equipment 306 sends an automated email to notify the sales team after receiving the sales order.

Step 330 is performed to create a software delivery number. In some embodiments, the customer data, the order quantity and the delivery date can be searched based on the software delivery number.

In step 332, the management equipment 306 performs an automated transaction.

In step 340, the activation server 308 checks the current order (e.g., the purchase order, the sales order and/or the content searched based on the software delivery number).

In step 342, the activation server 308 provides a SLA portal link.

In step 342, the activation server 308 sends a first automated email, and the said first automated email includes the SLA portal link.

In step 344, after the customer sign off the SLA protocol, step 346 is performed to complete the SLA protocol.

In step 348, the activation server 308 obtains an installation program created according to the stock keeping unit in the current order.

In step 350, the activation server 308 provides a SLA sign back link, download links for an enabling program and the installation program.

In step 351, the activation server 308 sends a second automated email, and the second automated email includes the SLA sign back link and the download links for the enabling program, the installation program and the activation library of the application program.

In step 352, the purchaser or a contact person uses the computing device 302 to obtain the download links for the installation program, the enabling program and the activation library of the application program.

In step 354, the user device 312 updates/installs the application program by the installation program.

In step 356, the user device 312 executes the enabling program.

In step 357, the user device 312 sends a return value of the activation library and the device information through the network to the activation server 308.

In step 358, the activation server 308 verifies the return value and the device information according to the stock keeping unit in the current order and device serial numbers included in the past purchase order. When the verification in step 360 passes, step 361 is performed.

In step 361, the activation server 308 provides a license key through the network.

In step 362, when the user device 312 executed the installed/updated application program, the license key can activate the execution of the application program, such that the execution of the application is active.

In step 364, when the number of authorized devices (e.g., the user devices) reaches the product quantity, the software delivery has been completed.

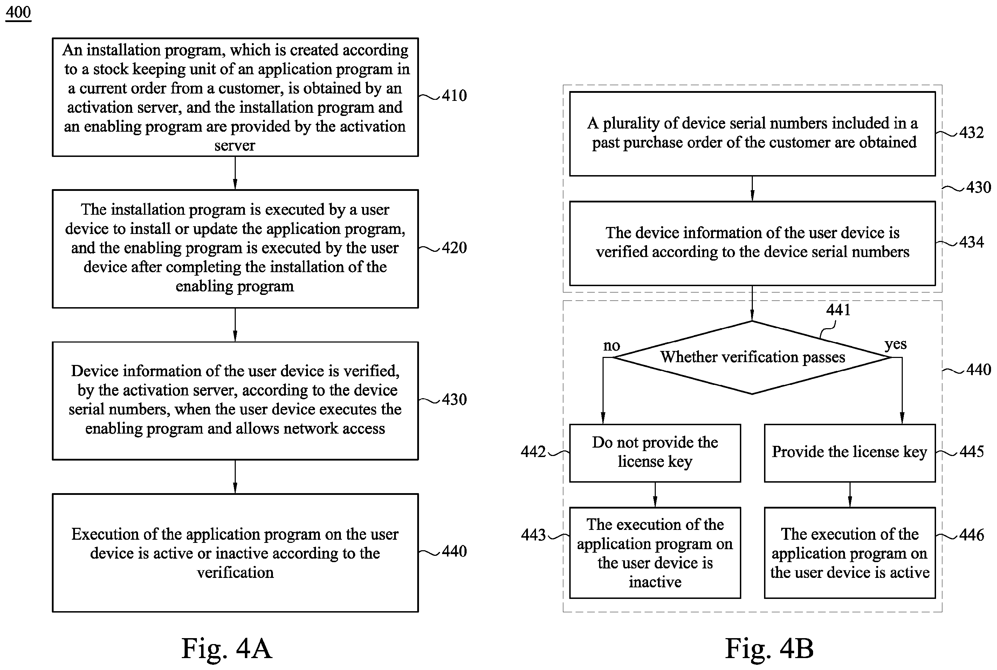

A description is provided with reference to Fig. 4A and Fig. 4B. Fig. 4A and Fig. 4B depict flow charts of a software activation method 400 according to some embodiments of the present disclosure. In some embodiments, the software activation method 400 includes steps 410, 420, 430 and 440, where step 430 includes steps 432 and 434, and step 440 includes steps 441, 442, 443, 445 and 446.

In step 410, an installation program, which is created according to a stock keeping unit of an application program in a current order from a customer, is obtained by an activation server, and the installation program and an enabling program are provided by the activation server.

In step 420, the installation program is executed by a user device to install or update the application program, and the enabling program is executed by the user device after completing the installation of the enabling program.

In step 430, the device information of the user device is verified, by the activation server, according to the device serial numbers, when the user device executes the enabling program and allows network access.

In step 440, execution of the application program on the user device is active or inactive according to the verification.

In step 441, whether the verification passes is determined. When verification has not passed, step 442 is performed to not provide the license key. Otherwise, step 445 is performed to provide the license key. In step 443, the application program on the user device is inactivated when there is no license key. In step 446, the license key can activate the application program on the user device.

In summary, the architecture of the sales management system 100 for software subscription services can be adjusted according to the specific usage of the enterprise. This has characteristics of low initial cost and offers an effective grasp of the specific customer's purchasing needs, and can also provide customized software installation files for specific application scenarios required by customers. The software activation system 200 and the software activation methods 300 and 400 of the present disclosure can implement the non-serial number-bound subscription service by the update mechanism of the automatic installation files. Moreover, the software activation system 200 and the software activation methods 300 and 400 of the present disclosure can effectively simplify the information required for purchasing software products, such that customers do not need to provide serial numbers or order numbers of the hardware devices in advance to perform software installation and activation. Therefore, by simplifying the purchasing process and enhancing the software activation mechanism, the present disclosure can improve the consumer experience and increase customer stickiness. Accordingly, product functions can be continuously improved and customized services can be accumulated over time and kept up with market changes, thereby creating value for customers due to the improved functionalities.

## Claims

1. A software activation method (300), comprising:
obtaining (348), by an activation server (308), an installation program created according to a stock keeping unit of an application program in a current order from a customer, and providing (350), by the activation server (308), the installation program and an enabling program; and
executing (354), by a user device (312), the installation program to install or update the application program, and executing (356), by the user device (312), the enabling program after completing installation of the installation program, wherein when the user device (312) executes the enabling program and allows network access, the software activation method (300) further comprises:
obtaining, by the activation server (308), a plurality of device serial numbers included in a past purchase order of the customer;
verifying (358), by the activation server (308), device information of the user device according to the plurality of device serial numbers; and
providing (364), by the activation server (308), a license key to the user device (312) when verification passes (360), and wherein execution of the application program on the user device (312) is activated (362) based on the license key.

2. The software activation method (300) of claim 1, wherein each of the plurality of device serial numbers comprises at least one of a serial number of a device, a central processor unit identification or a mainboard identification.

3. The software activation method (300) of claim 1 or 2, wherein the device information of the user device (312) comprises at least one of a serial number of the user device (312), a central processor unit identification or a mainboard identification.

4. The software activation method (300) of claim 1 or 2, wherein each of the current order and the past purchase order comprises an electronic mail address.

5. The software activation method (300) of claim 4, wherein the past purchase order is searched based on an electronic mail domain of the electronic mail address.

6. The software activation method (300) of claim 5, wherein the electronic mail domain refers to an organization or a company owning the electronic mail address.

7. The software activation method (300) of claim 5, wherein the electronic mail domain comprises information of a city or a region.

8. The software activation method (300) of claim 1, wherein the installation program comprises an activation library created based on information of the current order.

9. The software activation method (300) of claim 8, wherein the activation library is written into the user device (312) when the user device (312) executes the installation program.

10. The software activation method (300) of claim 8 or 9, wherein the software activation method (300) further comprises:
sending, by the user device (312), the device information and a return value of the activation library to the activation server, when the user device (312) executes the enabling program and allows the network access; and
verifying, by the activation server (308), the return value and the device information of the user device (312) according to the information of the current order and the plurality of device serial numbers.

11. The software activation method (300) of claim 10, wherein the return value of the activation library corresponds to the stock keeping unit of the application program.

12. The software activation method (300) of claim 10 or 11, wherein when the user device (312) executes the enabling program and allows the network access, the software activation method (300) further comprises:
verifying, by the activation server (308), the return value and the device information according to the stock keeping unit and the device serial numbers.

13. The software activation method (300) of claim 1, wherein:
when the verification fails, the license key is not provided, such that the execution of the application program on the user device (312) is inactive.

14. The software activation method (300) of claim 1, further comprising:
obtaining, by the activation server (308), a product quantity in the current order; and
determining (364), by the activation server (308), that the current order has been completed, when a number of authorized devices reaches the product quantity.

15. A software activation system to perform any method according to any of claims 1-14.
